Europäisches Patentamt

European Patent Office

Office européen des brevets

(11) Publication number: **0 116 501**
**B1**

(12) **EUROPEAN PATENT SPECIFICATION**

(45) Date of publication of patent specification: **07.10.87**
(21) Application number: **84400198.2**
(22) Date of filing: **30.01.84**

(51) Int. Cl.⁴: **F 16 D 65/42**

(54) **Brake adjusting screw and clip assembly.**

(30) Priority: **31.01.83 US 462576**

(43) Date of publication of application:
**22.08.84 Bulletin 84/34**

(45) Publication of the grant of the patent:
**07.10.87 Bulletin 87/41**

(84) Designated Contracting States:
**DE FR GB IT SE**

(56) References cited:
**US-A-3 570 632**
**US-A-3 797 613**
**US-A-4 270 634**

(73) Proprietor: **ALLIED CORPORATION**
**Columbia Road and Park Avenue P.O. Box 2245R**
**(Law Dept.)**
**Morristown New Jersey 07960 (US)**

(72) Inventor: **Wolfli, Clyde Roy**
**415 Whitman Boulevard**
**Elyria Ohio 44035 (US)**

(74) Representative: **Timoney, Ian Charles Craig et al**
**Service Brevets Bendix 44, rue François 1er**
**F-75008 Paris (FR)**

Courier Press, Leamington Spa, England.

## Description

This invention relates to a drum brake assembly and, more particularly, to an adjusting screw and clip assembly therefor.

Brake assemblies actuated by, for example, wedge-shaped actuators, have been used for several years on heavy-duty vehicles. These brake assemblies are of the type having a drum mounted for rotation with a member to be braked, a fixed support mounted adjacent the drum, and a pair of brake shoes mounted on the support for movement toward and away from the drum. The brake shoes have corresponding pairs of contiguous ends, and a pair of actuators are mounted on the support between corresponding pairs of contiguous ends of the brake shoes. The actuators include apparatus for engaging the contiguous ends of the shoes for forcing the latter toward the drum. Return springs yieldably urge the brake shoes away from the drum. The actuators further include an adjusting screw and clip assembly that engages the ends of the shoes. This assembly includes a flange member, and a clip having a body and a pair of projecting portions projecting away from the body and cooperating with each other with the body to define a recess receiving an end of the brake shoe.

Said clip is mounted on said flange member and has detents located on the sections of the clip adjacent the inner side of the flange, wherein by the inner side of the flange is to be understood the side of the flange facing the actuator. Said detents cooperate with corresponding recesses on the flange of the flanged member to releasably restrain the clip and the flange member from rotation relative to one another. Further, yieldable means urge said clips toward the corresponding end of the corresponding brake shoe and yieldably maintain the detents on the clip in engagement with the recesses on the flange. Said flanged member includes a shank from which said flange extends and said body of said clip circumscribes said shank and is disposed adjacent the outer side of said flange, wherein by the outer side is to be understood the side of the flange facing the brake shoe. Further, said clip includes portions extending around the periphery of said flange and terminates in sections disposed adjacent the inner side of said flange.

An example of such drum brake assemblies is given in US—A—3,570,632. Further, US—A—3,797,613 illustrates the use of a separate resilient washer acting between the inner side of the flange of an adjuster member and a clip in order to retain the adjuster member in position. In such brake assemblies the clip assembly must permit the adjusting screw to rotate relative to the clip so that the brake may be adjusted manually, yet must prevent rotation at all other times to maintain brake adjustment. These prior art devices, unfortunately, cannot accommodate the widened ends now used on brake shoes used by at least one major vehicle manufacturer. Furthermore, these prior art devices are composed of many parts which have a tendency to corrode together so that manual adjustment cannot be accomplished, cannot accommodate the wider brake shoe ends, and are sometimes difficult to assemble. Some parts tend to distort permanently when stressed, resulting in unsatisfactory performance.

In contrast to this the present invention lies in the use of the Belleville washer which is located on the shoe side of the flange and is adapted to uge the clip towards the shoe end.

A further advantage of the present invention lies in that the adjusting clip can be designed to accommodate brake shoes having ends of virtually any width. It also has the advantage of providing a brake adjusting screw and clip assembly in which the torque required for manual adjustment and for maintaining adjustment can be predetermined within a relatively narrow range.

These and other features of the invention will become apparent in view of the following description, with reference to the accompanying drawings, in which:

Figure 1 is an elevational view, partly in section, of a wedge brake made pursuant to the teachings of my present invention;

Figure 2 is a view taken substantially along lines 2—2 of Figure 1; and

Figure 3 is a cross-sectional view taken substantially along lines 3—3 of Figure 2.

Referring now to the drawings, a wedge brake assembly generally indicated by the numeral 10 includes a drum 12 which is mounted for rotation with a member to be braked, such as a vehicle wheel. A fixed support 14 is installed on a nonrotating portion of the vehicle adjacent the drum 12, such as the vehicle axle flange. Attachment of the fixed support 14 to the axle flange can be accomplished, for example, by installing conventional bolts (not shown) in apertures 16 provided in the fixed support. A pair of brake shoes 18, 20 are slidably mounted on the fixed support 14 for movement toward and away from the drum 12. The brake shoes 18, 20 are held on the fixed support 14 by conventional hold-down clips 22. Each of the brake shoes 18, 20 is of conventional construction having a T-shaped cross-section consisting of a web 24, a shoe table 26 secured to the web 24 and friction material 28 mounted on the shoe table 26. The brake shoe 18 has widened, roller-like ends 30, 32 and the brake shoe 20 has similar ends 34, 36.

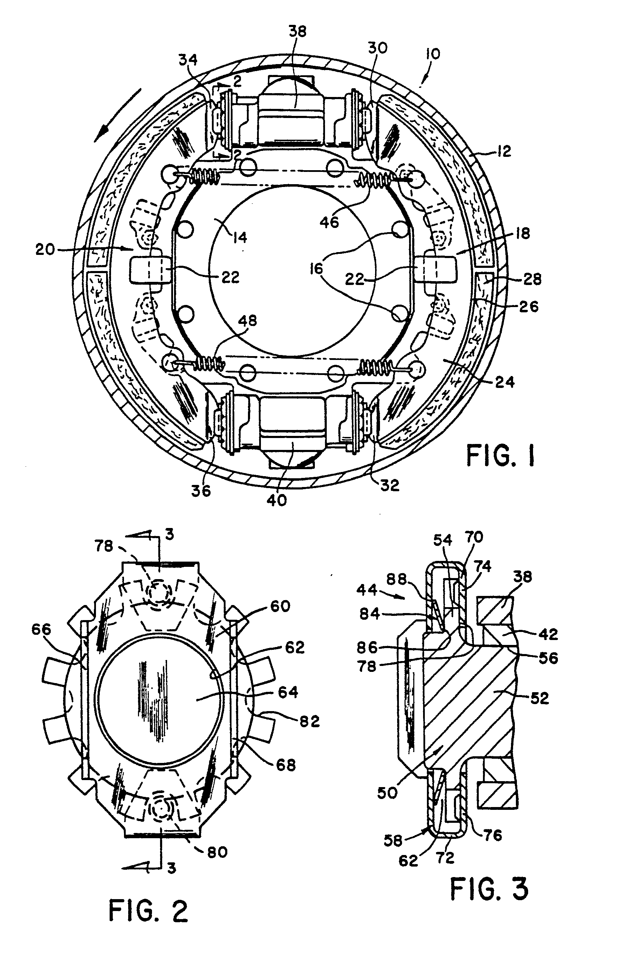

A pair of actuator housings 38, 40 are mounted on the fixed support 14 between the ends 30, 34 and 32, 36 of the brake shoes 18 and 20 respectively. The actuator housings 38, 40 each contain actuator assemblies. The actuating mechanism does include pistons 42, a pair of which are slidably mounted in each of the actuator housings 38, 40, and are connected to the corresponding ends 30—36 of the brake shoes 18, 20 by mechanism generally indicated by the numeral 44 (see Figure 3). When the aforementioned actuating mechanism is actuated to effect a brake application, the pistons 42 urge the corresponding ends of their corresponding brake shoes 18, 20 toward the drum 12. When the brake is released, return springs 46, 48 urge the brake shoes 18, 20 away from the drum 12.

Referring now to Figures 2 and 3 of the drawings, the connecting mechanism 44 includes an ajusting screw 50 comprising a threaded shank 52 and a flange 54 which projects radially from the shank 52. The shank 52 is provided with screw threads (not shown) which threadedly engage corresponding screw threads (not shown) provided on the inner bore 56 of the piston 42. The adjuster screw 50 can be extended from the piston 42 to thereby accomplish adjustment of the brakes by moving the released position of the brake shoes 18, 20 closer to the drum 12 to compensate for wear of the friction material 28. This adjustment is accomplished either automtically by mechanism well known to those skilled in the art, or manually as will hereinafter be described. A clip assembly generally indicated by the numeral 58 includes a body portion 60 which extends generally parallel to the side 62 of the flange 54 which faces away from the actuator assembly 38 and toward the brake shoe 20. The body portion 60 is provided with an aperture 62 which receives the head 64 of the screw 50. A pair of forward facing projections 66, 68, which face toward the brake shoe 20 and away from the side 62 of the flange portion 54, cooperate with the body portion 60 to define a recess which receives the enlarged end 34 of the brake shoe 20. The clip 58 further includes a pair of arms 70, 72 which wrap around the periphery of the flange portion 54 and terminate in sections 74, 76 which face the side 78 of the flange 54 opposite the side 62. The arm sections 74, 76 are provided with detents 78, 80, which are small rounded projections received in corresponding detents defined by recesses 82 which circumscribe the periphery of the flange portion 54. The recesses 82 also function to receive a conventional adjusting tool (not shown) by which the adjusting screw 50 can be rotated, as will hereinafter be described in detail. A conventional Belleville spring washer 84 circumscribes the head 64 of the adjusting screw 50. The inner edge 86 of the Belleville washer 84 engages the surface 62 on the flange portion 54, and the outer edge 88 of the Belleville washer 84 engages the body portion 60 of the clip 58. The Belleville washer is conventional, and acts as a spring which collapses when a predetermined force is applied thereto. In the absence of such force, the Belleville washer 84 resiliently urges the body portion 60 of the clip away from the surface 62.

In operation, the braking mechanism 10 operates as described hereinabove and forces the brake shoes 18, 20 towards the drum 12, thereby effecting a brake application. Upon release of the brakes, the return springs 46, 48 urge the brake shoes 18, 20 away from the drum 12 toward the position illustrated in Figure 1. Manual adjustment of the brakes may be effected by inserting a proper brake adjustment tool into one of the exposed recesses 82 on the periphery of the flange 54. When a predetermined torque is applied to the adjusting screw 52, the Belleville washer, 84 partially collapses and the detents 78, 80 are forced out of their corresponding recesses 82. As the flange portion 54 is turned, the detents 78, 80 are received into an adjacent recess 82, whereupon the Belleville washer 84 springs back to the shape illustrated in Figure 3, thereby applying a predetermined force to the clip 58. Accordingly, the torque required to turn the adjusting screw 50 in either direction is a function of the strength of the Belleville washer 84, which remains substantially constant.

**Claim**

Drum brake assembly comprising a drum (12) mounted for rotation with a member to be braked, a fixed support (14) mounted adjacent said drum (12), a pair of brake shoes (18, 20) mounted on said support (14) for movement toward and away from said drum (12), said brake shoes (18, 20) having corresponding pairs of contiguous ends (30, 32; 34, 36), an actuator (38, 40) mounted on said fixed support (14), said actuator (38, 40) being mounted between a corresponding pair of contiguous ends (30, 32; 34, 36) of the brake shoes (18, 20), said actuator (38, 40) including means (44) for engaging said contiguous ends (30, 32; 34, 36) of said brake shoes (18, 20) for forcing the latter toward said drum (12), and resilient means (46, 48) yieldably urging said brake shoes (18, 20) away from said drum (12), said engaging means (44) including a flanged member presenting a radially projecting flange (54), a clip (58) having a body (60), a pair of projecting portions (66, 68) projecting away from said body (60), said projecting portions (66, 68) cooperating with each other and with said body (60) to define a recess receiving an end (30, 32; 34, 36) of one of said brake shoes (18, 20), said clip (58) being mounted on said flanged member (54), said clip (58) having detents (78, 80) located on the sections of the clip (58) disposed adjacent the inner side of the flange and cooperating with corresponding recesses (82) on the flange of the flanged member (54) to releasably restrain the clip (58) and the flanged member (54) from rotation relative to one another, and yieldable means (84) urging said clip (58) toward the corresponding end (30, 32; 34, 36) of the corresponding brake shoe (18, 20) and yieldably maintaining the detents (78, 80) on the clip (58) in engagement with the recesses on the flange (54), said flange member (54) including a shank (52) from which said flange extends, said body (60) of said clip (58) circumscribing said shank (52) and being disposed adjacent the outer side (62) of said flange (54), said clip (58) including portions (70, 72) extending around the periphery of said flange (54) and terminating in sections (74, 76) disposed adjacent the inner side of said flange (54), characterized in that said yieldable means (84) being a Belleville spring washer disposed on the outer side (62) of said flange (54) and circumscribing said shank (52), said Belleville spring washer having inner (86) and outer (88) circumferential edges, one of said edges (86, 88) engaging the outer side (62) of said flange (54), the other edge of said Belleville spring washer (84) engaging a portion of said body (60) of said clip (58) facing the outer side (62) of the flange (54) to urge the clip (58) toward said corresponding end (30, 32; 34, 36) of the corresponding brake shoe (18, 20) to thereby yieldably urge the detents (78, 80) on said sections (74, 76) of the clip (58) into engagements with the recesses (82) on the flange (54), the periphery of said flange being serrated to define the recesses on the flange.

## Patentanspruch

Trommelbremseneinheit mit einer Trommel (12), die so montiert ist, daß sie sich mit einem abzubremsenden Element dreht, einem festen Lager (14), das benachbart zu dem Trommel (12) montiert ist, einem Paar von Bremsschuhen (18, 20), die am Lager (14) so montiert sind, daß sie sich in Richtung auf die Trommel (12) und von dieser weg bewegen, wobei die Bremsschuhe (18, 20) entsprechende Paare von aneinanderstoßenden Enden (30, 32; 34, 36) aufweisen, einer am festen Lager (14) montierten Betätigungseinheit (38, 40), die zwischen einem entsprechenden Paar von aneinanderstoßenden Enden (30, 32; 34, 36) der Bremsschuhe (18, 20) montiert ist und Einrichtungen (44) zum Ineingriffbringen der aneinanderstoßenden Enden (30, 32; 34, 36) der Bremsschuhe (18, 20) aufweist, um diese in Richtung auf die Trommel (12) zu pressen, und elastischen Einrichtungen (46, 48), die die Bremsschuhe (18, 20) in nachgiebiger Weise von der Trommel (12) weg drücken und die ein Flanschelement, das einen radial vorstehenden Flansch (54) besitzt, eine Klemme (58) mit einem Körper (60) und einem Paar von vorstehenden Abschnitten (66, 68), die vom Körper (60) weg vorstehen und miteinander und mit dem Körper (60) zusammenwirken, um eine Ausnehmung zu bilden, die ein Ende (30, 32; 34, 36) von einem der Bremsschuhe (18, 20) aufnimmt, wobei die Klemme (58) an dem Flanschelement (54) montiert ist und Anschläge (78, 80) aufweist, die sich an den Abschnitten der Klemme (58) befinden, welche benachbart zur Innenseite des Flansches angeordnet sind, und die mit entsprechenden Ausnehmungen (82) am Flansch des Flanschelementes (54) zusammenwirken, um die Klemme (58) und das Flanschelement (54) lösbar an einer Drehung relativ zu einander zu hindern, und elastische Einrichtungen (84) umfassen, die die Klemme (58) in Richtung auf das entsprechende Ende (30, 32; 34, 36) des entsprechenden Bremsschuhs (18, 20) drücken und die Anschläge (78, 80) auf der Klemme (58) elastisch in Eingriff mit den Ausnehmungen auf dem Flansch (54) halten, wobei das Flanschelement (54) einen Schaft (52) aufweist, von dem aus sich der Flansch erstreckt, wobei der Körper (60) der Klemme (58) den Schaft (52) umgibt und benachbart zur Außenseite (62) des Flansches (54) angeordnet ist und wobei die Klemme (58) Abschnitte (70, 72) besitzt, die sich um den Umfang des Flansches (54) herum erstrecken und in Abschnitten (74, 76) enden, welche benachbart zur Innenseite des Flanschen (54) angeordnet sind, dadurch gekennzeichnet, daß es sich bei den elastischen Einrichtungen (84) um einen Tellerfeder handelt, die an der Außenseite (62) des Flansches (54) angeordnet ist und den Schaft (52) umgibt, daß die Tellerfeder einen inneren (86) und einen äußeren (88) Umfangsrand besitzt, von denen einer mit der Außenseite (62) des Flansches (54) in Eingriff steht, während der andere mit einem Abschnitt des Körpers (60) der Klemme (58) in Eingriff steht, welcher zur Außenseite (62) des Flansches (54) zeigt, um die Klemme (58) in Richtung auf das entsprechende Ende (30, 32; 34, 36) des entsprechenden Bremsschuhs (18, 20) zu drücken und dadurch die Anschläge (78, 80) auf den Abschnitten (74, 76) der Klemme (58) elastisch in Eingriff mit den Ausnehmungen (82) auf dem Flansch (54) zu pressen, und daß der Umfang des Flansches gezackt ist, um die Ausnehmungen auf dem Flansch zu bilden.

## Revendication

Assemblage de frein à tambour comprenant un tambour (12) monté pour tourner avec une pièce qui doit être freinée, un support fixe (14) monté de façon adjacente audit tambour (12), une paire de sabots de frein (18, 20) montés sur ledit support (14) et pouvant être déplacés en direction dudit tambour (12) et écartés de celui-ci, lesdits sabots de frein (18, 20) présentant des paires correspondantes d'extrémités contiguës (30, 32, 34, 36), un organe de commande (38, 40) monté sur ledit support fixe (14), ledit organe de commande (38, 40) étant monté entre une paire correspondante d'extrémités contiguës (30, 32, 34, 36) des sabots de frein (18, 20) ledit organe de commande (38, 40) comprenant des moyens pour attaquer lesdits extrémités contiguës (30, 32, 34, 36) desdits sabots de frein (18, 20) pour pousser ces derniers vers ledit tambour (12) et des moyens élastiques (46, 48) qui écartent élastiquement lesdits sabots de frein (18, 20) dudit tambour (12), lesdits moyens d'attaque (44) comprenant un élément à bride présentant une bride (54) s'étendant radialement, une attache (58) qui présente un corps (60), deux portions saillantes (66, 68) faisant saillie dudit corps (60), lesdits portions saillantes (66, 68) coopérant l'une avec l'autre et avec ledit corps (60) pour définir un creux qui reçoit une extrémité (30, 32, 34, 36) d'un desdits sabots de frein (18, 20), ladite attache (58) étant montée sur ledit élément à bride (54), ladite attache (58) présentant des détentes (78, 80) situées sur les sections de l'attache (58) adjacentes au côté interne de la bride et coopérant avec les creux correspondants (82) sur la bride de l'élément à bride (54) pour empêcher, de façon débrayable l'attache (58) et l'élément à bride (54) de tourner l'une par rapport à l'autre, et un système élastique (84) poussant ladite attache (58) vers l'extrémité correspondante (30, 32, 34, 36) du sabot de frein correspondant (18, 20) et maintenant élastiquement les détentes (78, 80) sur l'attache (58) engagées dans les creux de la bride (54), ledit élément à bride (54) comprenant une tige (52) à partir de laquelle ladite bride s'étend, ledit corps (60) de ladite attache (58) entourant ladite tige (52) et étant disposée de façon adjacente au côté extérieur (62) de ladite bride (54), ladite attache comprenant des portions (70, 72) qui s'étendent autour du pourtour de ladite bride (54) et se terminent en sections (74, 76) disposées de façon adjacente au côté interne de ladite bride (54), caractérisé en ce que lesdits moyens élastiques (84) sont une rondelle élastique Belleville disposée sur le côté externe (62) de ladite bride (54) et entourant ladite tige (52), ladite rondelle élastique Belleville présentant des arêtes circonférentielles intérieure (86) et extérieure (88), une desdites arêtes (86, 88) attaquant le côté externe (62) de ladite bride (54), l'autre arête de ladite rondelle élastique Belleville attaquant une portion dudit corps (60) de ladite attache (58) qui fait face au côté externe (62) de bride (54) pour pousser l'attache (58) vers l'extrémité correspondante (30, 32, 34, 36) du sabot de frein correspondant (18, 20) afin de pousser de cette façon élastiquement les détentes (78, 80) sur lesdites sections (74, 76) de l'attache (58) en engagement avec les creux (82) sur la bride (54), le pourtour de ladite bride étant denté pour définir les creux de la bride.

FIG. I

FIG. 2

FIG. 3